# EUROPÄISCHE PATENTANMELDUNG

(11) **EP 1 733 832 A1**
(43) Veröffentlichungstag der Anmeldung: **20.12.2006**
(21) Anmeldenummer: 06002700.0
(22) Anmeldetag: 10.02.2006
(51) Int. Cl.: B23D 55/02

(54) **Werkzeugmaschine**

(30) Priorität: 14.06.2005 DE 202005009377 U
(71) Anmelder: Metabowerke GmbH, 72622 Nürtingen (DE)
(72) Erfinder: Vorwerk, Uwe, 49770 Herzlake (DE)
(74) Vertreter: Gesthuysen, von Rohr & Eggert

(57) **Zusammenfassung**

Gegenstand der Erfindung ist eine Werkzeugmaschine, insbesondere Bandsäge, mit einem Träger (1) und einem an dem Träger (1) gelagerten, eine Werkstückauflagefläche (7) bildenden Bearbeitungstisch (8), wobei der Bearbeitungstisch (8) aus einer Grundstellung heraus um eine virtuelle Schwenkachse (9) in mindestens eine Richtung schwenkbar ist, wobei die Schwenkachse (9) durch eine kreisbogenförmige Kulissenführung (11) definiert ist, wobei die Kulissenführung (11) an dem Bearbeitungstisch (8) oder an dem Träger (1) vorgesehen ist, wobei der Bearbeitungstisch (8) mittels eines Lagermittels (12) in radialer Richtung an dem Träger (1) gelagert und geführt ist, wobei das Lagermittel (12) in die Kulissenführung (11) eingreift und entsprechend korrespondierend an dem Träger (1) oder an dem Bearbeitungstisch (8) angeordnet ist und wobei der Bearbeitungstisch (8) in axialer Richtung an dem Träger (1) festgelegt ist. Diese zeichnet sich dadurch aus, daß das Lagermittel (12) den Bearbeitungstisch (8) nicht nur in radialer Richtung an dem Träger (1) lagert und führt, sondern auch den Bearbeitungstisch (8) in axialer Richtung an dem Träger (1) festlegt.

## Beschreibung

Die Erfindung betrifft eine Werkzeugmaschine mit den Merkmalen des Oberbegriffs von Anspruch 1.

Werkzeugmaschinen sind Vorrichtungen, die zur Materialbearbeitung wie z. B. Trennen und/oder Fräsen des zu bearbeitenden Materials, eingesetzt werden. Besondere Anwendungsfelder für eine Werkzeugmaschine sind die Holzbearbeitung, die Kunststoffbearbeitung und die Metallbearbeitung. Eine Werkzeugmaschine kann aber auch auf anderen Einsatzgebieten Anwendung finden. Unter einer Werkzeugmaschine ist hier insbesondere eine Bandsäge zu verstehen.

Die bekannte, den Ausgangspunkt der vorliegenden Erfindung bildende Bandsäge (DE 197 53 887 A1) weist einen Träger und einen an dem Träger gelagerten, eine Werkstückauflagefläche bildenden Bearbeitungstisch auf. Der Bearbeitungstisch ist aus einer Grundstellung heraus, in der er mit dem Sägeblatt einen 90° Winkel einschließt, um eine virtuelle Schwenkachse beidseitig schwenkbar. Zum Schwenken ist eine Getriebeverbindung vorgesehen, so daß der Bearbeitungstisch durch die Drehung eines Zahnrades geschwenkt wird.

Die virtuelle Schwenkachse des Bearbeitungstisches verläuft parallel zu der Bearbeitungsrichtung, also dem Sägeverlauf, des Werkstücks. Die virtuelle Schwenkachse wird durch eine kreisbogenförmige Kulissenführung gebildet. Jeweils eine Kulissenführung ist an einem von zwei einander gegenüberliegenden Tragelementen des Bearbeitungstisches vorgesehen.

Die virtuelle Schwenkachse definiert hier und ebenso bei der erfindungsgemäßen Werkzeugmaschine mit ihrem Verlauf eine axiale Richtung. Senkrecht zu dieser axialen Richtung strahlenförmig von der Schwenkachse ausgehende Linien definieren bezogen auf die Schwenkachse eine radiale Richtung.

Der Bearbeitungstisch ist mit den beiden Tragelementen an dem Träger der Bandsäge gelagert. Dabei dienen in die Kulissenführung eingreifende Lagermittel zur Lagerung und Führung des Bearbeitungstisches in der radialen Richtung. In der axialen Richtung ist der Bearbeitungstisch mittels der beiden Tragelemente festgelegt. Diese umgreifen den Träger der Bandsäge, so daß eine axiale Verschiebung des Bearbeitungstisches nicht möglich ist.

Die Montage des Bearbeitungstisches an dem Träger ist bei der zuvor beschriebenen Konstruktion aufwendig, da die Lagerung des Bearbeitungstisches in radialer Richtung und die Festlegung in axialer Richtung voneinander getrennt und durch die verschiedenen Elemente realisiert sind. Diese Trennung macht es erforderlich, daß sowohl die Lagermittel als auch die Tragelemente genau aufeinander abgestimmt sein müssen, um eine sichere Lagerung zu gewährleisten. Dies erhöht die Fertigungskosten der Teile. Ferner ist bei dieser Bandsäge kein Schutz der Führung bzw. der Getriebeverbindung vor Verunreinigungen, wie z. B. Staub, vorgesehen.

Der vorliegenden Erfindung liegt das Problem zugrunde, eine Werkzeugmaschine der eingangs genannten Art hinsichtlich der Lagerung und Festlegung des Bearbeitungstisches zu optimieren.

Die Erfindung löst das zuvor erläuterte Problem bei einer Werkzeugmaschine mit den Merkmalen des Oberbegriffs von Anspruch 1 durch die Merkmale des kennzeichnenden Teils von Anspruch 1. Bevorzugte Ausgestaltungen und Weiterbildungen sind Gegenstand der jeweiligen Unteransprüche.

Die Lösung des Problems wird nach der Erfindung zunächst dadurch erreicht, daß der Bearbeitungstisch mit einem Lagermittel nicht nur in radialer Richtung an dem Träger gelagert und geführt wird, sondern daß das Lagermittel den Bearbeitungstisch gleichzeitig auch in axialer Richtung an dem Träger festlegt. Hierdurch wird eine Reduzierung der notwendigen Bauteile erzielt. Außerdem wird die Toleranzempfindlichkeit verringert, da weniger Bauteile aufeinander abgestimmt werden müssen. Dennoch wird eine sichere Lagerung und Führung des Bearbeitungstisches gewährleistet.

In bevorzugter Ausgestaltung weist das Lagermittel eine bogenförmige Kontur auf, mit der es in die Kulissenführung eingreift, und einen Rand, der einen Abschnitt der Kulissenführung überdeckt. Die bogenförmige Kontur dient dabei der Lagerung und Führung des Bearbeitungstisches in radialer Richtung, während der Rand zur axialen Festlegung des Bearbeitungstisches vorgesehen ist.

Weiter vorteilhaft ist es, wenn eine Befestigungsplatte für das Lagermittel vorgesehen ist, die an der dem Lagermittel gegenüberliegenden Seite der Kulissenführung angeordnet ist. Diese dient als Gegenstück des Lagermittels für die axiale Festlegung des Bearbeitungstisches. Vorzugsweise ist die Kulissenführung in einem Tragelement des Bearbeitungstisches vorgesehen. Diese Elemente sind dabei in der Reihenfolge Befestigungsplatte, Tragelement, Lagermittel angeordnet. Diese Anordnung ermöglicht einen besonders kompakten und stabilen Aufbau der gesamten Lagerung und Führung des Bearbeitungstisches.

Ein weiterer Aspekt besteht darin, die Lagerung und Führung des Bearbeitungstisches in einem Schutzgehäuse anzuordnen, so daß die Lagerstelle des Bearbeitungstisches vor Verschmutzungen wie Staub und Sägespäne geschützt ist. Damit wird verhindert, daß sich die Kulissenführung zusetzt und dadurch die Schwenkbewegung des Bearbeitungstischs gehemmt oder blockiert wird.

Das Schutzgehäuse ist insbesondere bei einer Lagerung des Bearbeitungstisches mittels des zuvor beschriebenen Lagermittels, der Befestigungsplatte und des Tragelements des Bearbeitungstisches vorteilhaft, da hier eine kompakte Anordnung erzielt wird, bei der ein Schutzgehäuse relativ leicht realisiert werden kann.

Bei einer Lösung ist nicht nur eine kreisbogenförmige Kulissenführung vorgesehen, sondern deren zwei. Die erste Kulissenführung dient zur Führung der Schwenkbewegung und die zweite Kulissenführung zur Fixierung des Bearbeitungstisches in einer beliebigen Schwenkstellung. Die beiden Funktionen Führung und Feststellung werden also voneinander entkoppelt, wodurch jedes Element jeweils genau auf die ihm obliegende Funktion ausgelegt werden kann. Die Lagerung und Führung des Bearbeitungstisches wird dadurch insgesamt optimiert.

Diese Ausgestaltung bietet sich insbesondere in Zusammenhang mit der Verwendung eines Schutzgehäuses an, da hierdurch der zur Führung und radialen Lagerung des Bearbeitungstisches vorgesehene Teil vollständig von dem Schutzgehäuse verdeckt sein kann, ohne daß der für die Fixierung des Bearbeitungstisches in einer beliebigen Schwenkstellung für den Bediener zur Betätigung zugängliche Teil verdeckt wird.

Weitere Einzelheiten, Merkmale, Ziele und Vorteile der vorliegenden Erfindung werden nachfolgend anhand einer Zeichnung eines bevorzugten Ausführungsbeispiels näher erläutert. In der Zeichnung zeigt
- Fig. 1: eine perspektivische Ansicht einer Bandsägemaschine, teilweise geschnitten,
- Fig. 2: eine perspektivische Ansicht des Lagermittels aus Fig. 1,
- Fig. 3: einen Ausschnitt aus Fig. 1 mit der Befestigungsplatte,
- Fig. 4: einen Schnitt durch das Tragelement aus Fig. 1.

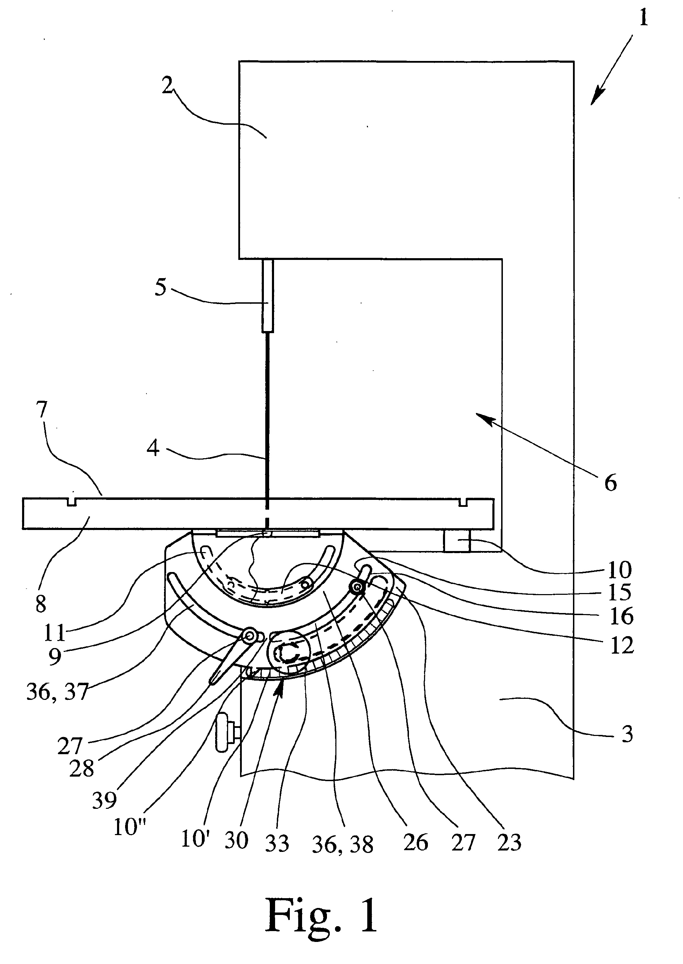

Fig. 1 zeigt als Beispiel einer Werkzeugmaschine eine Bandsäge mit einem C-förmigen Träger 1. Der Träger 1 weist einen oberen Abschnitt 2 mit einem Umlenkrad darin und einen unteren Abschnitt 3 ebenfalls mit einem Umlenkrad darin auf. Um die beiden Umlenkräder herum läuft ein Sägeband 4 mit einer Sägebandführung 5.

Im C-Maul 6 des C-förmigen Trägers 1 ist auf dem unteren Abschnitt 3 des Trägers 1 ein eine Werkstückauflagefläche 7 bildender Bearbeitungstisch 8 gelagert. Der Bearbeitungstisch 8 ist aus einer Grundstellung heraus, in der er von dem Sägeband 4 senkrecht durchsetzt wird, um eine virtuelle Schwenkachse 9 in eine Richtung schwenkbar. Möglich ist auch eine Lagerung, bei der der Bearbeitungstisch 8 in die beiden einander gegenüberliegenden Richtungen schwenkbar ist, hier bevorzugt ist jedoch nur eine Schwenkrichtung. Dadurch ist es nämlich möglich, den Bearbeitungstisch 8 in seiner Grundstellung zusätzlich zu einer Klemmung (siehe unten) auf einen Anschlag 10 auftreffen zu lassen und dem Bearbeitungstisch 8 so in der Grundstellung eine größere Stabilität zu geben. Der Anschlag 10 ist vorzugsweise elastisch ausgebildet, beispielsweise aus Gummi.

Zur Einstellung einer definierten Schwenkstellung sind eine Winkelskala 10' und ein entsprechender Zeiger 10" vorgesehen.

Die virtuelle Schwenkachse 9 definiert mit ihrem Verlauf eine axiale Richtung. Jede Richtung quer zur axialen Richtung wird, bezogen auf die Schwenkachse 9, als radiale Richtung bezeichnet.

Die virtuelle Schwenkachse 9 ist durch eine kreisbogenförmige Kulissenführung 11 definiert. Die Kulissenführung 11 ist an dem Bearbeitungstisch 8 oder an dem Träger 1 vorgesehen. Vorliegend ist die Kulissenführung 11 an einem zu dem Bearbeitungstisch 8 gehörenden Teil vorgesehen.

Zur Lagerung ist der Bearbeitungstisch 8 mittels eines Lagermittels 12 in radialer Richtung an dem Träger 1 gelagert und geführt. Das Lagermittel 12 ist entsprechend korrespondierend zu der Anordnung der Kulissenführung 11 an dem Träger 1 oder an dem Bearbeitungstisch 8 angeordnet, hier also an dem Träger 1.

Das Lagermittel 12 greift in die Kulissenführung 11 ein, so daß der Bearbeitungstisch 8 entlang der Kulissenführung 11 verschiebbar bzw. schwenkbar ist. In axialer Richtung ist der Bearbeitungstisch 8 an dem Träger 1 festgelegt. Das Lagermittel 12 ist dabei so ausgeführt, daß es den Bearbeitungstisch 8 nicht nur in radialer Richtung an dem Träger 1 lagert und führt, sondern ihn auch in axialer Richtung an dem Träger 1 festlegt. Das Lagermittel 12 nimmt somit eine Doppelfunktion wahr und dient, abgesehen von einem Gegenstück zur axialen Festlegung des Bearbeitungstisches 8, alleine zur Lagerung des Bearbeitungstisches 8. Gegebenenfalls kann auch vorgesehen sein, zwei solcher Lagermittel 12 einander gegenüberliegend anzuordnen. Der Bearbeitungstisch 8 wäre dann noch stabiler gelagert, allerdings wäre die Montage aufwendiger, zumal eine solche überbestimmte Lagerung des Bearbeitungstisches 8 nicht notwendig ist.

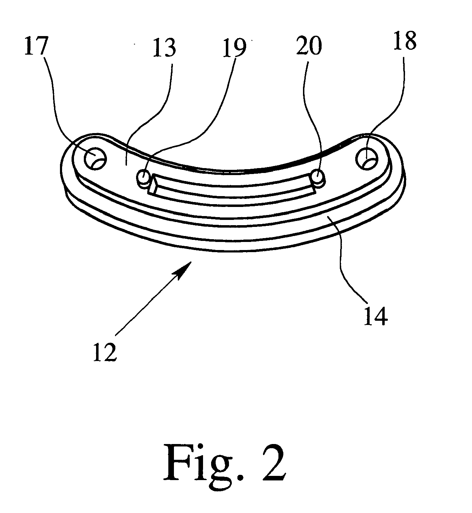

Das Lagermittel 12 weist eine bogenförmige Kontur 13 auf (Fig. 1, 2) mit der es in die Kulissenführung 11 eingreift. Zusätzlich weist das Lagermittel 12 einen Rand 14 auf, der hier umlaufend um die bogenförmige Kontur 13 vorgesehen ist. Der Rand 14 überdeckt zwei einander gegenüberliegende Abschnitte 15, 16 der Kulissenführung 11. Die bogenförmige Kontur 13 des Lagermittels 12 dient hier der radialen Führung und Lagerung des Bearbeitungstisches 8 und der Rand 14 dient der axialen Festlegung des Bearbeitungstisches 8. Hierzu ist an der dem Rand 14 gegenüberliegenden Seite der Kulissenführung 11 ein entsprechendes Gegenstück vorgesehen (siehe unten). Alternativ zu der hier beschriebenen Ausgestaltung des Randes 14 ist es ausreichend, wenn dieser auch nur einen Abschnitt 15 der Kulissenführung 11 überdeckt. Um ein Verkanten der bogenförmigen Kontur 13 in der Kulissenführung 11 zu verhindern, ist die Überdeckung von zwei vorzugsweise einander gegenüberliegenden Abschnitten 15, 16 jedoch bevorzugt.

Das Lagermittel 12 weist zwei voneinander beabstandete Schraubenlöcher 17, 18 auf. Diese sind so angeordnet, daß in die Schraubenlöcher 17, 18 eingesetzte Schrauben durch die Kulissenführung 11 hindurch ragen und dementsprechend die Relativbewegung zwischen Kulissenführung 11 und Lagermittel 12 nicht behindern. Die in die Schraubenlöcher 17, 18 eingesetzten Schrauben dienen zur Befestigung des Lagermittels 12. Die Schraubenlöcher 17, 18 sind vorzugsweise jeweils an einem Rand des Lagermittels 12 angeordnet.

Zur Befestigung des Lagermittels 12 sind zusätzlich zwei Bolzen 19, 20 vorgesehen, die ebenfalls so angeordnet sind, daß sie durch die Kulissenführung 11 hindurchragen. Die Bolzen 19, 20 erstrecken sich dabei in korrespondierende Löcher 21, 22 des Trägers 1 (oder eines mit dem Träger 1 verbundenen Teils) oder des Bearbeitungstisches 8.

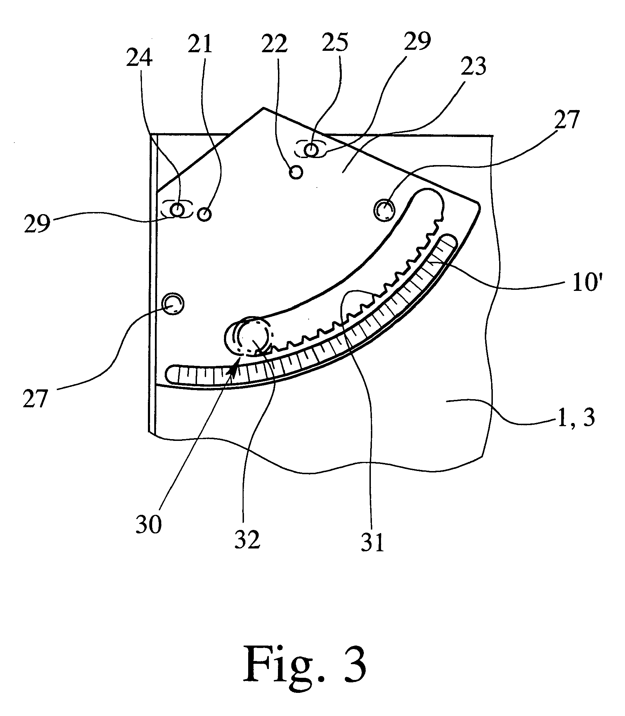

Hier und vorzugsweise ist eine Befestigungsplatte 23 für das Lagermittel 12 vorgesehen (Fig. 2, 3). Diese ist mit dem Träger 1 starr verbunden, hier nämlich mit diesem durch Schrauben verbunden. Die Befestigungsplatte 23 weist hier die Löcher 21, 22 für die Bolzen 19, 20 des Lagermittels 12 auf. Ferner weist die Befestigungsplatte 23 Löcher 24, 25 für sich durch die Schraubenlöcher 17, 18 erstreckende Schrauben auf. Die Löcher 24, 25 können als Gewindelöcher vorgesehen sein, so daß das Lagermittel 12 an der Befestigungsplatte 23 angeschraubt wird. Hier sind die Löcher 24, 25 jedoch ohne Innengewinde ausgeführt. Die Befestigungsplatte 23 und das Tragelement 12 sind zusammen an den Träger 1 angeschraubt. Die Schrauben erstrecken sich folglich durch die Löcher 24, 25 bis in den Träger 1 hinein, so daß das Lagermittel 12 auch starr mit dem Träger 1 verbunden ist.

Der Bearbeitungstisch 8 selbst weist ein Tragelement 26 auf, das zur Lagerung des Bearbeitungstisches 8 in Verbindung mit dem Lagermittel 12 dient. Das Tragelement 26 weist hier und vorzugsweise die Kulissenführung 11 auf. Im gezeigten Ausführungsbeispiel ist die Befestigungsplatte 23 starr mit dem Träger 1 verbunden, das Lagermittel 12 ist starr mit der Befestigungsplatte 23 verbunden und das Tragelement 26 ist starr mit dem Bearbeitungstisch 8 verbunden. Diese drei Elemente sind dabei in der Reihenfolge Befestigungsplatte 23, Tragelement 26, Lagermittel 12 angeordnet. Die bogenförmige Kontur 13 des Lagermittels 12 erstreckt sich also in die Kulissenfiihrung 11. Der Rand 14 überdeckt die Kulissenführung 11 und dient somit zur axialen Festlegung des Tragelements 26 von der einen Seite. Von der anderen Seite liegt die Befestigungsplatte 23 als Gegenstück an dem Tragelement 26 an. Die Bolzen 19, 20 und die Schrauben dienen zur Fixierung des Lagermittels 12 an der Befestigungsplatte 23. Das Tragelement 26 ist damit axial festgelegt und radial entlang der Kulissenführung 11 beweglich.

Das Tragelement 26 ist hier und vorzugsweise als Metall-Gußteil ausgeführt, beispielsweise als Aluminium-Gußteil oder als Zink-Druckgußteil. Besonders geeignet ist die Ausführung als Zink-Druckgußteil, da so eine besonders hohe Festigkeit erzielt und entsprechend hohe Kräfte aufgenommen werden können.

Zur Fixierung des Bearbeitungstisches 8 in einer beliebigen Schwenkstellung ist mindestens ein Klemmelement 27 vorgesehen. Vorliegend ist ein Klemmelement 27 mit einem Klemmhebel 28 vorgesehen und ein weiteres Klemmelement 27, das nur bei Bedarf verwendet wird, normalerweise aber nur als Führung wirkt.

Zur Befestigung des Lagermittels 12 an dem Träger 1 mittels der Befestigungsplatte 23 weist der Träger 1 Langlöcher 29 auf. Die Befestigungsplatte 23 ist entlang der Langlöcher 29 verschiebbar an dem Träger 1 und somit auch der Bearbeitungstisch 8. Die Langlöcher 29 dienen einer einfachen Montage und optimalen Ausrichtung des Bearbeitungstisches 8 an dem Träger 1. Je nach Ausgestaltung der Lagerung können auch Langlöcher an dem Bearbeitungstisch 8 vorgesehen sein. Langlöcher können insgesamt zur Befestigung des Lagermittels 12 und/oder der Kulissenführung 11 bzw. wie im hier gezeigten Ausführungsbeispiel auch zur Befestigung der Befestigungsplatte 23 und/oder des Tragelements 26 vorgesehen sein.

In Fig. 1 und 3 ist eine Getriebeverbindung 30 zu erkennen, mit der der Bearbeitungstisch 8 schwenkbar ist. Die Getriebeverbindung 30 wird durch ein bogenförmiges Zahnsegment 31 und ein damit kämmendes Zahnrad 32 gebildet. Hier und vorzugsweise ist das Zahnrad 32 in dem Tragelement 26 gelagert. Das Zahnsegment 31 ist an dem Träger 1 angeordnet, hier insbesondere an der Befestigungsplatte 23. Zum Schwenken des Bearbeitungstisches 8 ist nun ein Handknauf 33 vorgesehen. Durch Drehung des Handknaufs 33 wird das in dem Tragelement 26 gelagerte Zahnrad 32 gedreht. Das Zahnrad 32 kämmt dabei mit dem bogenförmigen Zahnsegment 31, so daß das Tragelement 26 sich relativ zu der Befestigungsplatte 23 bewegt. Die Bewegung wird dabei durch die Kulissenführung 11 geführt.

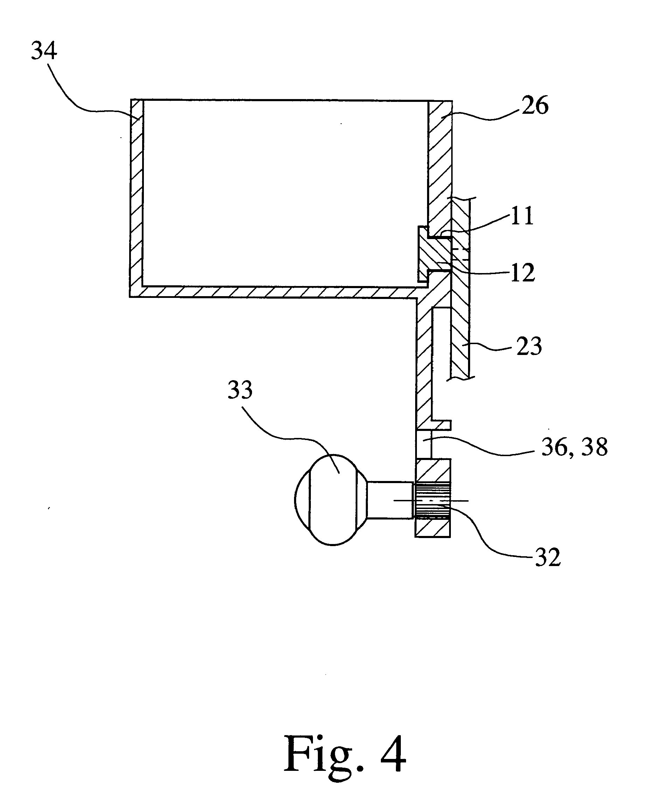

Ein Aspekt der Erfindung besteht darin, die Lagerstelle des Bearbeitungstisches 8 vor Verschmutzung durch Staub, Sägespäne etc. zu schützen. Hierzu ist ein unterhalb des Bearbeitungstisches 8 angeordnetes Schutzgehäuse 34 vorgesehen (Fig. 4). Die Lagerung und Führung des Bearbeitungstisches 8 ist dabei innerhalb des Schutzgehäuses 34 angeordnet, so daß die Lagerstelle vor Staub geschützt ist. Hier und vorzugsweise ist eine Seitenwand des Schutzgehäuses 34 nicht vollständig geschlossen, sondern weist die Kulissenführung 11 auf, die eine Führung des Bearbeitungstisches 8 in radialer Richtung ermöglicht. Sie bildet so das Tragelement 26 des Bearbeitungstisches 8.

Zum Schwenken des Bearbeitungstisches 8 ist hier und vorzugsweise eine Getriebeverbindung 30 vorgesehen. Auch die Getriebeverbindung 30 wird zumindest teilweise von dem Schutzgehäuse 34 verdeckt (Fig. 1), so daß auch diese vor Verschmutzung geschützt ist. Verschmutzungen an der Lagerstelle des Bearbeitungstisches 8 oder an der Getriebeverbindung 30 können sonst zu einer erschwerten Schwenkbewegung des Bearbeitungstisches 8 führen oder diese sogar ganz blockieren.

Das Schutzgehäuse 34 ist hier und vorzugsweise mit dem Tragelement 26 des Bearbeitungstisches 8 verbunden, nämlich damit einstückig ausgebildet. Das Tragelement 26 dient dabei auch zur Lagerung eines Teils der Getriebeverbindung 30. Hierzu darf auf die zuvor beschriebene Ausgestaltung der Werkzeugmaschine verwiesen werden.

Ein weiterer Aspekt der Erfindung besteht darin, die Führung der Schwenkbewegung von der Fixierung des Bearbeitungstisches 8 in einer beliebigen Schwenkstellung zu trennen. Hierzu ist eine erste Kulissenführung 11 vorgesehen, die zur Führung der Schwenkbewegung des Bearbeitungstisches 8 dient, und eine zweite Kulissenführung 36, die zur Fixierung des Bearbeitungstisches 8 in einer beliebigen Schwenkstellung dient. Die erste Kulissenführung 11 zur Führung der Schwenkbewegung des Bearbeitungstisches 8 ist vorzugsweise entsprechend der vorherigen Beschreibung ausgestaltet.

Zur Fixierung des Bearbeitungstisches 8 in einer beliebigen Schwenkstellung ist mindestens ein Klemmelement 27 vorgesehen, das sich durch die zweite Kulissenführung 36 erstreckt. Das Klemmelement 27 bzw. die Klemmelemente 27 sind also an dem Träger 1 bzw. hier an der Befestigungsplatte 23 angeordnet und erstrecken sich durch die zweite Kulissenführung 36. Von der Gegenseite ist ein Klemmhebel 28 an dem einen Klemmelement 27 und eine Mutter an dem anderen Klemmelement 27 angeordnet.

Die zweite Kulissenfiihrung 36 ist hier und vorzugsweise konzentrisch zur ersten Kulissenführung 11 angeordnet. Dabei weist die zweite Kulissenführung 36 ebenso wie die erste Kulissenführung 11 eine im wesentlichen gleichbleibende Breite auf. Wenn die beiden Kulissenführungen 11, 36 jedoch nicht zueinander konzentrisch angeordnet sind, so ist es erforderlich, daß die zweite Kulissenführung 36 eine relativ große Breite aufweist oder eine veränderliche Breite, damit das sich durch die Kulissenführung 36 erstreckende Klemmelement 27 die Schwenkbewegung des Bearbeitungstisches 8 nicht blockiert.

Hier und vorzugsweise ist die erste Kulissenführung 11 oberhalb der zweiten Kulissenführung 36 angeordnet. Dies ist besonders vorteilhaft, da die erste Kulissenführung 11 um so besser vor Schmutz geschützt ist, je näher sie an der Unterseite des Bearbeitungstisches 8 angeordnet ist. Ferner ist diese Anordnung aus Gründen einer einfachen Bedienbarkeit vorteilhaft, da ein weiter unten angeordnetes Klemmelement 27 für den Bediener leichter erreichbar ist.

Die zweite Kulissenführung 36 wird von zwei voneinander beabstandeten Bereichen 37, 38 gebildet. Die beiden Bereiche 37, 38 der Kulissenführung 36 sind an einander gegenüberliegenden Enden durch einen Steg 39 voneinander getrennt. Der Steg 39 ist aus Gründen einer besseren Festigkeit vorgesehen.

Fig. 4 zeigt, daß die beiden Kulissenführungen 11, 36 in einem Tragelement 26 des Bearbeitungstisches 8 angeordnet sind. Insbesondere für das Tragelement 26 gilt auch die vorherige Beschreibung. Die Anordnung der beiden Kulissenführungen 11, 36 in dem Tragelement 26 ist aus Gründen einer kompakten Anordnung besonders vorteilhaft. Alternativ dazu kann jedoch auch vorgesehen sein, daß eine Kulissenführung 11; 36 in einem Tragelement 26 des Bearbeitungstisches 8 und die andere Kulissenführung 36; 11 in dem Träger 1 bzw. einer Befestigungsplatte 23 angeordnet ist.

## Patentansprüche

1. Werkzeugmaschine, insbesondere Bandsäge, mit einem Träger (1) und einem an dem Träger (1) gelagerten, eine Werkstückauflagefläche (7) bildenden Bearbeitungstisch (8),
wobei der Bearbeitungstisch (8) aus einer Grundstellung heraus um eine virtuelle Schwenkachse (9) in mindestens eine Richtung schwenkbar ist,
wobei die Schwenkachse (9) durch eine kreisbogenförmige Kulissenführung (11) gebildet ist und mit ihrem Verlauf eine axiale Richtung definiert,
wobei die Kulissenführung (11) an dem Bearbeitungstisch (8) oder an dem Träger (1) vorgesehen ist,
wobei der Bearbeitungstisch (8) mittels eines Lagermittels (12) in radialer Richtung bezogen auf die Schwenkachse (9) an dem Träger (1) gelagert und geführt ist,
wobei das Lagermittel (12) in die Kulissenführung (11) eingreift und entsprechend korrespondierend an dem Träger (1) oder an dem Bearbeitungstisch (8) angeordnet ist und
wobei der Bearbeitungstisch (8) in axialer Richtung an dem Träger (1) festgelegt ist,
**dadurch gekennzeichnet,**
**daß** das Lagermittel (12) den Bearbeitungstisch (8) nicht nur in radialer Richtung an dem Träger (1) lagert und führt, sondern den Bearbeitungstisch (8) auch in axialer Richtung an dem Träger (1) festlegt.

2. Werkzeugmaschine nach Anspruch 1, **dadurch gekennzeichnet,**
**daß** das Lagermittel (12) eine bogenförmige Kontur (13) aufweist, mit der das Lagermittel (12) in die Kulissenführung (11) eingreift, und daß das Lagermittel (12) einen Rand (14) aufweist, der zumindest einen Abschnitt (15; 16), vorzugsweise zwei einander gegenüberliegende Abschnitte (15, 16), der Kulissenführung (11) überdeckt.

3. Werkzeugmaschine nach Anspruch 1 oder 2, **dadurch gekennzeichnet,**
**daß** das Lagermittel (12) zwei Schraubenlöcher (17, 18) aufweist, die so angeordnet sind, daß in diese eingesetzte Schrauben durch die Kulissenführung (11) hindurchragen, und/oder
**daß** das Lagermittel (12) zwei Bolzen (19, 20) aufweist, die so angeordnet sind, daß sie in montiertem Zustand durch die Kulissenführung (11) hindurchragen und in korrespondierende Löcher (24, 25) des Trägers (1) oder des Bearbeitungstisches (8) eingreifen.

4. Werkzeugmaschine nach einem der Ansprüche 1 bis 3, **dadurch gekennzeichnet,**
**daß** eine Befestigungsplatte (23) für das Lagermittel (12) vorgesehen ist, die, vorzugsweise, mit dem Träger (1) starr verbunden ist, und/oder
**daß** der Bearbeitungstisch (8) ein Tragelement (26) aufweist, das, vorzugsweise, die Kulissenführung (11) aufweist und/oder als Metall-Gußteil ausgeführt ist,
wobei, vorzugsweise, die Befestigungsplatte (23) starr mit dem Träger (1) verbunden ist, das Lagermittel (12) starr mit der Befestigungsplatte (23) verbunden ist, das Tragelement (26) starr mit dem Bearbeitungstisch (8) verbunden ist und diese Elemente (23, 12, 26) in der Reihenfolge Befestigungsplatte (23), Tragelement (26), Lagermittel (12) angeordnet sind.

5. Werkzeugmaschine nach einem der Ansprüche 1 bis 4, **dadurch gekennzeichnet,**
**daß** mindestens ein Klemmelement (27) vorgesehen ist, mit dem der Bearbeitungstisch (8) in einer beliebigen Schwenkstellung fixierbar ist, und/oder
**daß** an dem Träger (1) und/oder an dem Bearbeitungstisch (8) zur Befestigung des Lagermittels (12) und/oder der Kulissenführung (11) Langlöcher (29) vorgesehen sind.

6. Werkzeugmaschine nach einem der Ansprüche 1 bis 5, **dadurch gekennzeichnet,**
**daß** eine Getriebeverbindung (30) vorgesehen ist, mit der der Bearbeitungstisch (8) schwenkbar ist,
wobei, vorzugsweise, die Getriebeverbindung (30) durch ein bogenförmiges Zahnsegment (31) und ein damit kämmendes Zahnrad (32) gebildet ist,
wobei vorzugsweise, das Zahnrad (32) in dem Tragelement (26) gelagert und das Zahnsegment (31) an dem Träger (1), insbesondere der Befestigungsplatte (23), angeordnet ist.

7. Werkzeugmaschine nach einem der Ansprüche 1 bis 6,
**dadurch gekennzeichnet,**
**daß** ein unterhalb des Bearbeitungstisches (8) angeordnetes Schutzgehäuse (34) vorgesehen ist und
**daß** die Lagerung und Führung des Bearbeitungstisches (8) innerhalb des Schutzgehäuses (34) angeordnet ist, so daß die Lagerstelle vor Staub geschützt ist.

8. Werkzeugmaschine nach Anspruch 7, **dadurch gekennzeichnet,**
**daß** eine Getriebeverbindung (30) vorgesehen ist, mit der der Bearbeitungstisch (8) schwenkbar ist, und daß die Getriebeverbindung (30) zumindest teilweise von dem Schutzgehäuse (34) verdeckt wird, und/oder
**daß** das Schutzgehäuse (34) mit dem Tragelement (26) des Bearbeitungstisches (8) verbunden, insbesondere einstückig ausgeführt, ist, das, vorzugsweise, auch zur Lagerung eines Teils der Getriebeverbindung (30) dient.

9. Werkzeugmaschine nach einem der Ansprüche 1 bis 8,
**dadurch gekennzeichnet,**
**daß** eine zweite kreisbogenförmige Kulissenführung (36) vorgesehen ist und
**daß** die erste Kulissenführung (11) zur Führung der Schwenkbewegung und die zweite Kulissenführung (36) zur Fixierung des Bearbeitungstisches (8) in einer beliebigen Schwenkstellung vorgesehen ist.

10. Werkzeugmaschine nach Anspruch 9, **dadurch gekennzeichnet,**
**daß** mindestens ein Klemmelement (27) vorgesehen ist, das sich durch die zweite Kulissenführung (36) erstreckt, und/oder
**daß** die zweite Kulissenführung (36) konzentrisch zur ersten Kulissenführung (11) angeordnet ist, und/oder
**daß** die erste Kulissenführung (11) oberhalb der zweiten Kulissenführung (36) angeordnet ist, und/oder
**daß** die zweite Kulissenführung (36) von zwei voneinander beabstandeten Bereichen (37, 38) gebildet ist.

11. Werkzeugmaschine nach Anspruch 9 oder 10, **dadurch gekennzeichnet,**
**daß** eine Kulissenführung (11; 36) in einem Tragelement (26) des Bearbeitungstisches (8) und die andere Kulissenführung (36; 11) in dem Träger (1), insbesondere einer Befestigungsplatte(23), angeordnet ist.

## Geänderte Patentansprüche

### Geänderte Patentansprüche gemäss Regel 86(2) EPÜ.

**1.** Bandsäge mit einem Träger (1) und einem an dem Träger (1) gelagerten, eine Werkstückauflagefläche (7) bildenden Bearbeitungstisch (8),
wobei der Bearbeitungstisch (8) aus einer Grundstellung heraus um eine virtuelle Schwenkachse (9) in mindestens eine Richtung schwenkbar ist,
wobei die Schwenkachse (9) durch eine kreisbogenförmige Kulissenführung (11) gebildet ist und mit ihrem Verlauf eine axiale Richtung definiert,
wobei die Kulissenführung (11) an dem Bearbeitungstisch (8) oder an dem Träger (1) vorgesehen ist,
wobei der Bearbeitungstisch (8) mittels eines Lagermittels (12) in radialer Richtung bezogen auf die Schwenkachse (9) an dem Träger (1) gelagert und geführt ist,
wobei das Lagermittel (12) in die Kulissenführung (11) eingreift und entsprechend korrespondierend an dem Träger (1) oder an dem Bearbeitungstisch (8) angeordnet ist,
**dadurch gekennzeichnet,**
**daß** das Lagermittel (12) aufweist
eine bogenförmige Kontur (13), mit der es in die Kulissenführung (11) eingreift,
einen Rand (14), der zwei einander gegenüberliegende Abschnitte (15, 16) der Kulissenführung (11) überdeckt, und
zwei Schraubenlöcher (17, 18), die so angeordnet sind, daß in diese eingesetzte Schrauben durch die Kulissenführung (11) hindurchragen, und/oder
zwei Bolzen (19, 20), die so angeordnet sind, daß sie in montiertem Zustand durch die Kulissenführung (11) hindurchragen und in korrespondierende Löcher (24, 25) des Trägers (1) oder des Bearbeitungstisches (8) eingreifen,
so daß dieses Lagermittel (12) den Bearbeitungstisch (8) nicht nur in radialer Richtung an dem Träger (1) lagert und führt, sondern auch in axialer Richtung an dem Träger (1) festlegt.

**2.** Bandsäge nach Anspruch 1, **dadurch gekennzeichnet,**
**daß** eine Befestigungsplatte (23) für das Lagermittel (12) vorgesehen ist, die, vorzugsweise, mit dem Träger (1) starr verbunden ist, und/oder
**daß** der Bearbeitungstisch (8) ein Tragelement (26) aufweist, das, vorzugsweise, die Kulissenführung (11) aufweist und/oder als Metall-Gußteil ausgeführt ist,
wobei, vorzugsweise, die Befestigungsplatte (23) starr mit dem Träger (1) verbunden ist, das Lagermittel (12) starr mit der Befestigungsplatte (23) verbunden ist, das Tragelement (26) starr mit dem Bearbeitungstisch (8) verbunden ist und diese Elemente (23, 12, 26) in der Reihenfolge Befestigungsplatte (23), Tragelement (26), Lagermittel (12) angeordnet sind.

**3.** Bandsäge nach Anspruch 1 oder 2, **dadurch gekennzeichnet,**
**daß** mindestens ein Klemmelement (27) vorgesehen ist, mit dem der Bearbeitungstisch (8) in einer beliebigen Schwenkstellung fixierbar ist, und/oder
**daß** an dem Träger (1) und/oder an dem Bearbeitungstisch (8) zur Befestigung des Lagermittels (12) und/oder der Kulissenführung (11) Langlöcher (29) vorgesehen sind.

**4.** Bandsäge nach einem der Ansprüche 1 bis 3, **dadurch gekennzeichnet,**
**daß** eine Getriebeverbindung (30) vorgesehen ist, mit der der Bearbeitungstisch (8) schwenkbar ist,
wobei, vorzugsweise, die Getriebeverbindung (30) durch ein bogenförmiges Zahnsegment (31) und ein damit kämmendes Zahnrad (32) gebildet ist,
wobei vorzugsweise, das Zahnrad (32) in dem Tragelement (26) gelagert und das Zahnsegment (31) an dem Träger (1), insbesondere der Befestigungsplatte (23), angeordnet ist.

**5.** Bandsäge nach einem der Ansprüche 1 bis 4, **dadurch gekennzeichnet,**
**daß** ein unterhalb des Bearbeitungstisches (8) angeordnetes Schutzgehäuse (34) vorgesehen ist und
**daß** die Lagerung und Führung des Bearbeitungstisches (8) innerhalb des Schutzgehäuses (34) angeordnet ist, so daß die Lagerstelle vor Staub geschützt ist.

**6.** Bandsäge nach Anspruch 5, **dadurch gekennzeichnet,**
**daß** eine Getriebeverbindung (30) vorgesehen ist, mit der der Bearbeitungstisch (8) schwenkbar ist, und daß die Getriebeverbindung (30) zumindest teilweise von dem Schutzgehäuse (34) verdeckt wird, und/oder
**daß** das Schutzgehäuse (34) mit dem Tragelement (26) des Bearbeitungstisches (8) verbunden, insbesondere einstückig ausgeführt, ist, das, vorzugsweise, auch zur Lagerung eines Teils der Getriebeverbindung (30) dient.

**7.** Bandsäge nach einem der Ansprüche 1 bis 6, **dadurch gekennzeichnet,**
**daß** eine zweite kreisbogenförmige Kulissenführung (36) vorgesehen ist und
**daß** die erste Kulissenführung (11) zur Führung der Schwenkbewegung und die zweite Kulissenführung (36) zur Fixierung des Bearbeitungstisches (8) in einer beliebigen Schwenkstellung vorgesehen ist.

**8.** Bandsäge nach Anspruch 7, **dadurch gekennzeichnet,**
**daß** mindestens ein Klemmelement (27) vorgesehen ist, das sich durch die zweite Kulissenführung (36) erstreckt, und/oder
**daß** die zweite Kulissenführung (36) konzentrisch zur ersten Kulissenführung (11) angeordnet ist, und/oder
**daß** die erste Kulissenführung (11) oberhalb der zweiten Kulissenführung (36) angeordnet ist, und/oder
**daß** die zweite Kulissenführung (36) von zwei voneinander beabstandeten Bereichen (37, 38) gebildet ist.

**9.** Bandsäge nach Anspruch 7 oder 8, **dadurch gekennzeichnet,**
**daß** beide Kulissenführungen (11, 36) in einem Tragelement (26) des Bearbeitungstisches (8) angeordnet sind oder
**daß** eine Kulissenführung (11; 36) in einem Tragelement (26) des Bearbeitungstisches (8) und die andere Kulissenführung (36; 11) in dem Träger (1), insbesondere einer Befestigungsplatte(23), angeordnet ist.
